# EUROPEAN PATENT SPECIFICATION

(11) **EP 0 237 155 B1**
(45) Date of publication and mention of the grant of the patent: **09.11.1994**
(21) Application number: 87300602.7
(22) Date of filing: 23.01.1987
(51) Int. Cl.: D06N 7/00, E04B 1/66

(54) **Method for manufacturing a barrier sheet and the use of such a barrier sheet for manufacturing and mounting construction elements in which such a barrier sheet is included**
Herstellungsverfahren einer Schutzvorrichtung, sowie deren Verwendung bei einem Herstellungs- und Aufbauverfahren von Bauelementen, in dem eine solche Schutzvorrichtung mitverwendet wird
Méthode de fabrication d'un dispositif de protection et l'utilisation d'un dispositif de protection pour la fabrication et le montage d'éléments de construction dans lequel de tels éléments sont inclus

(30) Priority: 13.02.1986 NO 860536; 22.10.1986 NO 864230
(43) Date of publication of application: 16.09.1987
(73) Proprietor: Isola Fabrikker A/S, N-3920 Eidanger (NO)
(72) Inventor: Tenvik, Henrik, N-3250 Larvik (NO); Dalsbotten, Per, N-3670 Notodden (NO); Evensen D.Y., Harald Thiis, N-3900 Porsgrunn (NO); Tellesbo, Ola, N-3940 Heistad (NO); Young, Jorgen, N-3900 Porsgrunn (NO); Mogstad, Tore, N-3670 Notodden (NO)
(74) Representative: Barlow, Roy James

(56) References cited:
- EP-A- 0 203 609
- DE-A- 824 632
- DE-A- 1 912 444
- FR-A- 1 280 810
- FR-A- 1 405 830
- FR-A- 2 516 104
- GB-A- 2 037 658
- GB-A- 2 148 146
- US-A- 4 347 844
- US-A- 4 439 473
- US-A- 4 547 423
- US-A- 4 557 958

## Description

### Field of invention

Method for manufacturing an integrated rib-reinforced barrier sheet, especially in connection with the manufacturing and mounting of construction elements.

The invention also relates to a special embodiment of such a barrier sheet, and this embodiment has found a special application as a web-shaped rib-reinforced barrier sheet, here called a rib-reinforced barrier web, since it can replace the earlier use of separate mineral wool strip, impregnated foundation wall felt, and breather paper, in connection with a beam structure on a concrete foundation.

Further, the invention relates to the use of such rib-reinforced barrier sheets for manufacturing and mounting construction elements, for example wall elements, roof elements and similar for houses or buildings, in which such barrier sheets or sheathing webs are included.

### Prior art

In connection with the building of residential houses or similar, which are constructed from wood, it is usual to cover the parts of the framework constituting the wall surfaces with so-called sheathing web or breather paper which is to make a wind barrier protecting against intrusion of wind into the interior of the house. Previously there has been used asphalt-impregnated cellulose cardboard as sheathing or breathing paper, the framework then being stiffened sufficiently by means of inclined wood braces arranged between the top stringer and the bottom stringer of the framework.

As wind barrier there have also been used asphalt impregnated panels, and these panels, aside from serving as wind barrier, also serve for stiffening the framework. However, in areas with heavy wind it has appeared that such asphalt-impregnated panels can render insufficient the sealing of the joints, a fact which has entailed that in addition to the panels there has been used breather paper to render the houses sufficiently tight against wind and draft. The object of the present invention is to improve the existing construction methods, in such a way that a good result is achieved on the basis of new products and the application thereof.

EP-A-0203609 relates to a sheet material for producing a coating comprising interconnecting pressure relieving passages. This is not in any way connected with the requirements of a rib-reinforced barrier sheet. The water-proof coating on the surface is imparted by bonding to a rolled-out sheet material, in separate zones which form interconnected pressure-relieving passages between the sheet material and the surface. However, a self-adhesive binder is required. The sheet is used on a roof surface but is unsuitable for mounting on the crest of a foundation wall.

US-A-4557958 relates to a fabric intended for the textile industry, and suitable as a cotton bale cover or bag fabric. This comprises a woollen substrate with a series of strips of a thermoplastic resin fused thereon. While the product may be in some aspects resemble the central portion of the rib-reinforced barrier sheet with which the invention is concerned, the cotton used for manufacture of this prior art cotton bale cover would not be suitable for use as a membrane between the ground beam and the crest of a foundation wall since the fabric is prone to absorbing moisture and this would result in deterioration of the beam.

### Description of the invention

A first aspect of the present invention is set out in claim 1.

The invention thus relates to the provision of an integrated rib-reinforced barrier sheet which is especially favourable in connection with the production and mounting of the construction element, and according to the invention the present rib-reinforced barrier sheet is manufactured by bringing together a felt web with a plastics material which in connection with the application on the felt provides zones allowing for the diffusion of water vapour through an otherwise water- and wind-proof finished web product.

Special embodiments of such a sheet are stated in the enclosed patent claims 2-19.

This web product can favourably be used in connection with the production and mounting of construction elements, for example wall elements, roof elements or similar for houses or other buildings, and especially where these elements constitute so-called prefabricated elements, or elements which are given their final form on site before being put into position in the building in which they are to be finally mounted.

In connection with wall elements the integrated rib-reinforced barrier sheet will function as a wind barrier or breather paper, and then especially in connection with frames which are stiffened by means of inclined metal strips.

Such a method for the production of construction elements renders a saving both as regards working hours, weight and total cost. The inclined braces render sufficient stiffness to the frames, and the frames can be manufactured separately, both as regards the inclusion of the inclined bracings and the application of the rib-reinforced barrier sheet. The new barrier sheet has a small mass and consequently contributes to a final product which is not fire promoting.

Another aspect of the invention is the fact of providing a special barrier sheet, that is a web-shaped rib-reinforced barrier sheet which in connection with a beam construction arrangement on a foundation wall replaces previous mineral wool strips, impregnated foundation wall felt and breather paper and thereby simplifies this part of the construction process in connection with the building of residential houses.

The production of such a rib-reinforced barrier sheet is due to the fact that there is used a barrier web as stated above, which along a centre portion is supplied with a material having resilient properties, for example a polymer asphalt serving as cog joint wool, and having a width corresponding to that of the foundation wall. Cog joint wool is known in the art as denoting a mineral wool strip which in the present context has the function of distributing the pressures between the foundation wall sill or perimeter joist, on the one hand, and the crest of the foundation wall, on the other hand.

The applied central portion of the polymer asphalt is profiled, and comprises ribs and recesses running in the longitudinal direction thereof, the width and the location of the ribs being adapted to the various locations and dimensions of foundations wall beams, edge beams or foundation wall sills.

The outer ribs of the polymer asphalt can have a width dimension corresponding to the thickness of a standard edge beam, i.e. an edgewise arranged beam on the sheet. Preferably, the distance from the outer margin of one outer rib to the outer margin of the next outer rib may correspond to the width of a standard foundation wall beam, a fact which ensures that the asphalt portion forms a resilient sealing between the foundation wall beam and the crest of the foundation wall, whether the foundation wall beam is laid flat down or arranged on edge.

Preferably, the rib-reinforced barrier sheet is manufactured in rolls in which the excess portions of the barrier web are folded overlappingly on to that side of the rib-reinforced barrier sheet which is opposite to the applied central portion of the structured polymer asphalt. In this way it is achieved that the finished rib-reinforced barrier sheet can be rolled out on an aligned foundation wall crest, and this operation is made only once, in contradistinction to the prior art which included firstly the laying of a mineral wool strip, secondly a foundation wall paper and finally breather paper.

The invention also involves advantages compared with previously known supports for foundation wall beams comprising a sealing strip which is mounted on the aligned foundation wall crest, and which is thereafter provided with a longitudinally extending breather paper.

In connection with the above discussed construction element this can now be mounted on a foundation wall beam on which in advance has been mounted the just discussed integrated rib-reinforced barrier sheet, which has the combined function of cog joint wool, foundation wall paper and barrier sheet, the rib-reinforced barrier sheet being provided as a web of substantially the same material as said barrier web, but wherein a centre portion having a width corresponding to the width of the foundation wall is supplied with a substantially structural asphalt, such that the rib-reinforced barrier sheet in mounted position on the crest of the foundation wall will have its extending barrier portions of the web to both sides of the crest of the foundation wall, and the construction elements after being mounted on the foundation wall sill, will have the outer protruding barrier portion attached to the outer side of the foundation wall sill or the edge beam and further across the bottom stringer of the frame of the construction element, whereafter the attached barrier portion of the rib reinforced barrier sheet is covered by an excess web portion at the bottom of the frame for further sealing of the space between the frame and the building body.

The inner extending barrier portion of the rib reinforced barrier sheet is attached to the intermediate joist extending inwardly from the foundation wall crest.

### Brief description of the drawings

In the following the invention will be further described reference being had to the attached drawings illustrating examples of the novel technique according to the invention.

Fig. 1 is a perspective view of a construction element in which the barrier or breather paper web according to the present invention can be included.

Fig. 1A illustrates the construction element according to Fig. 1, in which the barrier web is partly attached, and the element mounted on a foundation wall structure.

Fig. 2 illustrates a fraction of a construction element provided with a barrier web according to the present invention and mounted on a platform construction on a foundation wall, the foundation wall sill resting on a special embodiment of the barrier web according to the invention.

Fig. 3 is a perspective view of a section of a known arrangement of a beam structure on a concrete foundation including mineral wool strip, foundation wall paper and breather paper between the foundation wall crest and the foundation wall sill.

Fig. 4 is a perspective view of a section of a second known arrangement of a beam structure on a foundation wall, in which is used a special sealing strip of soft rubber arranged for sealing joints at the foundation wall sill.

Fig. 5 is a diagrammatic sketch of the production of the rib reinforced barrier sheet (13) according to the present invention.

Fig. 6 is a perspective view of the finished barrier sheet (13) in a partly rolled up form, as seen from the one side.

Fig. 7 is a perspective view of the partly rolled up barrier sheet (13), as seen from the under side.

Fig. 8a, b and c illustrate various profiles which can be used in the barrier sheet (13) according to the invention.

Fig. 9 is a diagrammatic sketch illustrating a first method for the production of a barrier or sheathing web (7) used in the present invention.

Fig. 10 is a diagrammatic sketch illustrating an alternative method for the production of a barrier web (7) used in the present invention.

### Embodiments of the invention

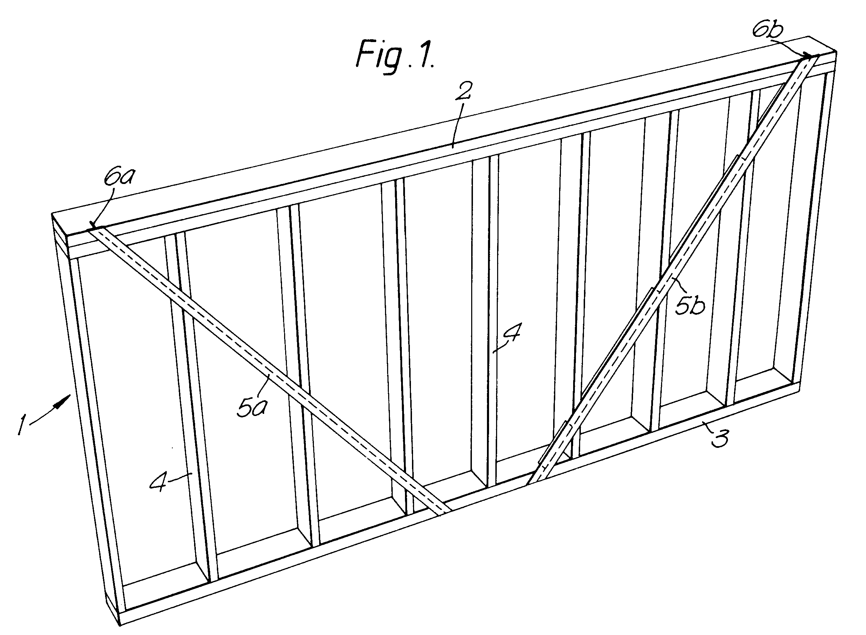

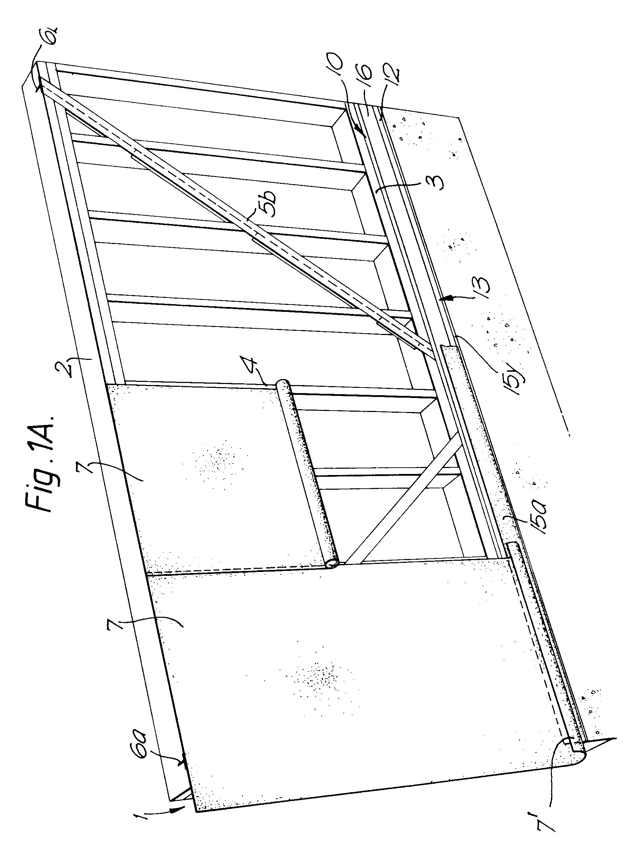

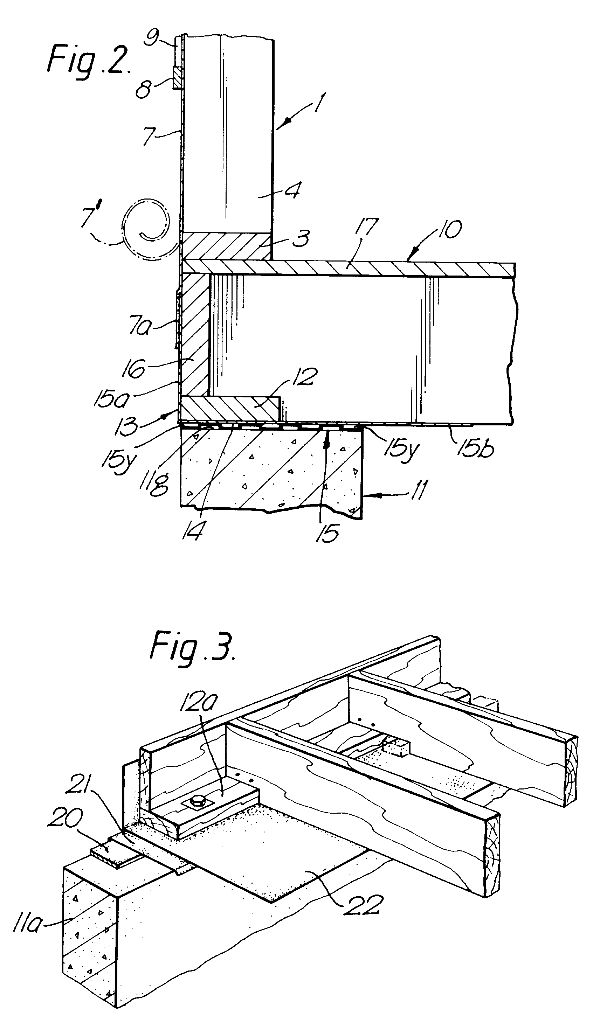

In Fig. 1 there is illustrated a partly finished construction element which is generally designated by 1, and which for example can be a wall element, roof element or similar for houses or buildings. The construction element 1 comprises substantially a wood frame having a top stringer 2, a bottom stringer 3 and intermediate joists 4. To give the frame a better stiffness than the joists 4 and the stringers 2 and 3 alone can give, there are used inclined strips 5a and 5b having a T-shaped section. In the top stringer 2, the joists 4 and the bottom stringer 3 there are cut appropriate inclined channels lying on a straight line which is inclined relative to the joists, and in the top stringer 2 these inclined channels are designated by reference numerals 6a and 6b. Into the channels the leg portion or the central protruding portion of the individually T-shaped strips 5a and 5b is inserted, the width of the channels being adapted for snug insertion of the leg portion of the T-shaped strip. The strips 5a, 5b are driven into position such that the remaining portions of the T-section, i.e. the flange portions become flush with the main plane of the wooden frame, whereafter the strips are nailed to the top stringer and the bottom stringer, and possibly to the intermediate joists. On the one side of the frame 1, which is illustrated in Fig. 1, and which can be assembled on a platform on or by the construction into which it is to be included, there is rolled out a water- and windproof barrier web having diffusion zones, as this is apparent from Fig. 1A and Fig. 2. This web is manufactured by combining a felt web and a plastics material which, in connection with its application on the felt, provides zones which allow diffusion of water vapour through an otherwise water- and windproof finished web product. Various methods will be discussed later.

The barrier web which in Fig. 1A and 2 is designated by 7, is cut at the top of the frame 1 substantially flush with the upper stringer 2, whereas at the bottom stringer 3 there is left an excess web portion 7' (Fig. 2), extending beyond the bottom stringer 3, and which is to cover parts of the building structure onto which the construction element or the frame 1 is to be mounted.

It is to be understood that the web 7, as appears from Fig. 1A, is rolled out from continuous lengths and is attached to the frame 1 with sidewise overlapping, the web being attached to the frame by nailing, gluing, tacking or similar, whereafter in the longitudinal or transverse direction of the frame there are attached lists 8 defining nailing strips for covering panels, and intermediate covering strips 9 for further sealing of the overlapping web length 7.

The construction element 1 which is provided with inclined strips 5a, 5b and the barrier 7, is thereafter put in position on the outer portion of a building body, for example a platform construction which in Fig. 1A and 2 is designated by the reference numeral 10, and which rests with its outer edge on a foundation wall 11.

Appropriately, the platform structure 10 with its foundation wall sill 12 is then located upon an integrated rib reinforced barrier sheet according to the present invention, which in Fig. 2 is designated by 13, and which will be further discussed in the following. The mentioned rib reinforced barrier sheet 13 is provided as a web of substantially the same material as said barrier web 7, but having a central portion 14 having a width corresponding to the width of the foundation wall 11, and being provided with a substantially structured layer 15 of polymer asphalt, such that the rib reinforced barrier sheet 13 which is provided on the foundation wall 11, will have its central portion 14 including the polymer asphalt layer 15 arranged along the foundation wall crest 11g, whereas on each side there protrude barrier portions 15a and 15b, respectively, i.e. on each side of the foundation wall crest 11g.

When the frame 1 has been put in position to be mounted on the platform structure 11, the outer protruding wind barrier portion 15a of the rib reinforced barrier sheet 13 is attached to the outer side of the ground beam sill 12 and the joining edge beam 16 and possibly the underfloor 17 and onto the bottom stringer 3 of the frame 1. Thereafter, the attached wind barrier portion 15a of the is covered by the excess web portion 7' of the wind barrier web 7 on the frame 1. The overlapping portions are finally clamped together by appropriate lists and sealing strips.

This form of providing a construction element 1, as well as the mounting thereof on the platform structure 10, as well as the mounting of the combined rib reinforced barrier sheet 13 result in a rapid and simplified erection of houses, the work being finished in shorter time, and at the same time there is achieved sealing effects which are just as good as those achieved by prior art technique.

Consequently, the frame or the construction element 1 offers a light structure which is well stiffened, and the barrier or sheathing web according to the invention renders appropriate sealing of the building against the intrusion of wind and water, the web also allowing moisture diffusion in case moisture should penetrate into the framework through the inner vapour barrier.

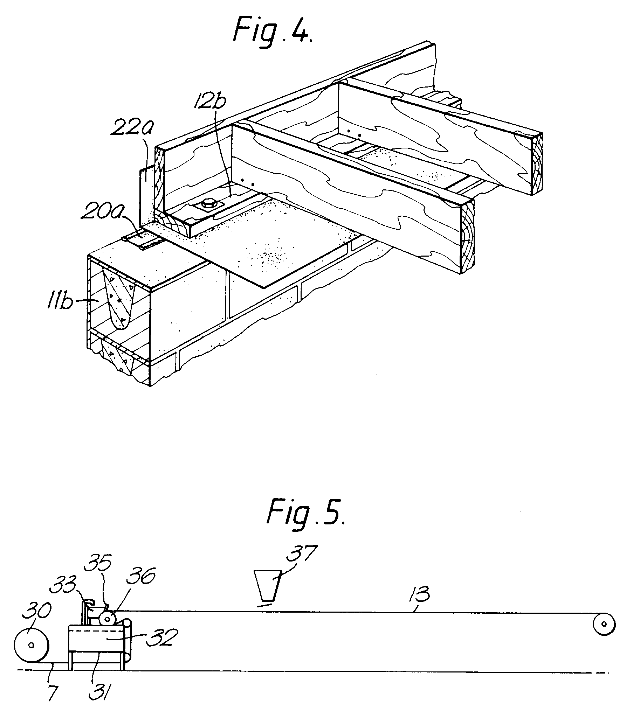

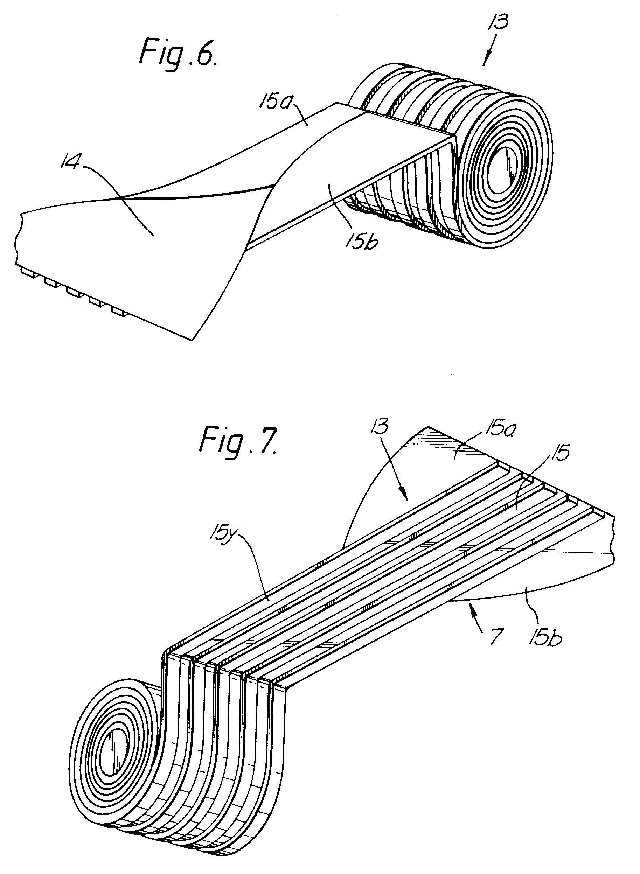

The rib reinforced barrier sheet 13 illustrated in Fig. 2 will, compared with the previously known embodiments for foundation wall sill sealing as illustrated in Figs. 3 and 4, give just as good results, and at the same time the mounting is simplified and consequently the cost kept to a minimun.

In Fig. 3 there is illustrated a perspective view of a fraction of a known arrangement of a beam structure on a concrete foundation 11a, there here being used a mineral wool strip or cog joint wool 20 for equalizing the pressure between the foundation wall sill 12a and the foundation wall crest. Besides, there is used impregnated foundation wall felt 21 for preventing transfer of moisture from the foundation wall 11a to the timber, at the same time there is also used breather paper 22 as wind barrier between the frame and the body of the building.

In Fig. 4, which is a perspective view of a fraction of another previously known arrangement of a beam construction on a foundation wall, the foundation wall is here designated by 11b, and onto the adjusted foundation wall crest there is provided a special sealing strip 20a of soft rubber adapted for sealing joints at the beam 12b. In addition to the special sealing strip 20a there is used breather paper 22a serving the same purpose as the breather paper 22 illustrated in Fig. 3.

In Fig. 5 there is diagrammatically illustrated how the manufacturing of the barrier sheet (13) according to the invention takes place.

As previously stated the barrier web 7 discussed in connection with Fig. 1, 1A and 2 is manufactured by joining a felt web with a plastics material which in connection with its application to the felt provides zones allowing for the diffusion of vapour through an otherwise water- and wind-proof finished web product.

In Fig. 5 there is illustrated a roll 30 of such a web product. The web product 7 is led through vessel 31 containing polymer asphalt 32, this polymer asphalt being pumped up to an overflow chamber 33 in which it is applied by means of a doctor 35 to the barrier web 7 at a center portion thereof. After the application of the central layer of the polymer asphalt, the web is guided over a cooling roller 36 and passed by a supply 37 of sand for the application of sand, so as to make the asphalt non-tacky. Thereafter, the finished web 13 is subjected to further cooling, whereafter the portion of the web which is not covered by polymer asphalt is folded overlapping onto that side of the finished rib reinforced barrier sheet 13 which is opposite to the applied central layer of structured polymer asphalt.

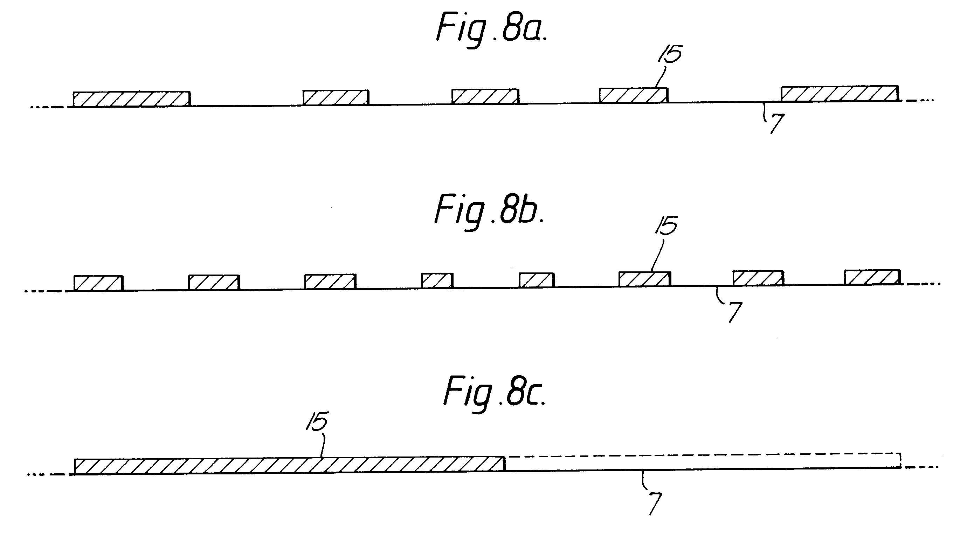

In Fig. 6 there is illustrated in perspective the finished rib reinforced barrier sheet 13 in partly rolled up form, as seen from the one side, whereas Fig. 7 is a perspective view of the same web as seen from the bottom side.

As appearing especially from Fig. 6, 7 and 2, the rib reinforced barrier sheet 13 comprises a main web 7 consisting of the above discussed barrier web, as well as a central portion 14 which is provided with a layer of profiled polymer asphalt 15, the width of the polymer asphalt corresponding to the width of the foundation wall crest, for example approximately 25 cm. The portions 15a and 15b of the web 7 which are not provided with the asphalt layer 15, are for storing purposes folded with a relative overlapping as this is best seen from Fig. 6.

Appropriately, the polymer asphalt 15 is given a profiled form, as appears from Fig. 2 and Fig. 7, the polymer asphalt comprising ribs and recesses running in the longitudinal direction of the web, the width and location of the ribs being adapted to various locations and dimensions of the foundation wall beams or sills.

It is preferred that the outer ribs 15y of the layer 15 has a width corresponding to the thickness of a standard foundation wall beam, i.e. a beam which is arranged on edge on the rib reinforced barrier sheet. Preferably, the distance from the outermost margin of one outer protrusion to the outermost margin of the next may correspond to a standard width of a foundation wall sill.

It is to be understood that the varying section of the polymer asphalt preferably can be made symmetrically and with a thickness and width allowing for stabilizing the beam arrangement. Further, a symmetrical embodiment of the ribs or strips of polymer asphalt gives the advantage that the rib reinforced barrier sheet can be rolled out in any direction on the foundation wall crest.

In Fig. 8a, b and c there are illustrated various sections of the polymer asphalt 15, the sections being provided with preferably varying protrusions and recesses, but also with even height, this is especially illustrated in Fig. 8c.

Further, it is to be understood that the above discussed barrier or breather web can also be used for sill constructions, i.e. when the framework is put together on the building. The same is the case with the above discussed reinforcement strips which can be mounted into a finished mounted wall.

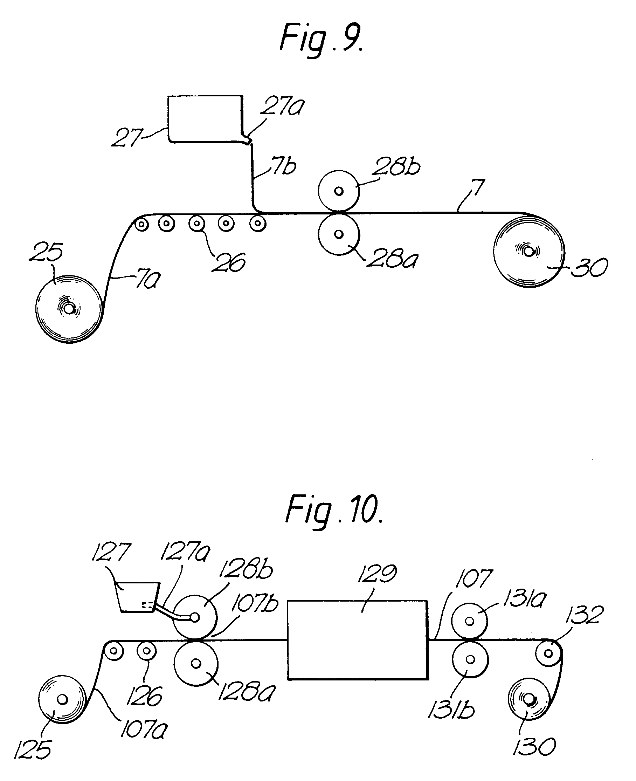

In Fig. 9 it is diagrammatically illustrated how the manufacturing of a barrier or breather web (7) can take place, Fig. 9 illustrating a roll 25 of felt web which for example is manufactured as a polypropylene felt or polyester felt or similar, having a non-woven structure. The felt web 7a is guided along a supporting portion 26 which is provided beneath an extruder 27 which in a suitable manner is provided with an orifice 27 extending transversely to the supporting portion 26 and having a length corresponding to the width of the felt web 7a.

In the extruder 27 there is provided a melt of polyethylene or polypropylene, for example at a temperature of 300^{o}C, and this plastics melt will be guided through orifice 27a towards the felt web 7a in the form of a thin curtain or film which renders the thickness of a layer in the range of for example 5-70 micrometers. After the plastics layer 7b has been applied to the felt web 7a, the laminate is guided through a roller pair comprising a lower roller 28a and an upper roller 28b which preferably is cooled to prevent the sticking of the plastics layer thereto. While the plastics layer is still soft, the upper roller 28b will together with the lower roller 28a press the plastics layer 7b against the felt web 7a. At the outlet side of the roller pair 28a, 28b there will appear a finished web product 7 which is rolled up in a roll 30 for later storing, transport or further treatment.

Since the felt web 7a has a relatively rough structure, the plastics layer 7b will, while being pressed onto the felt web 7a by running between the rollers 28a, 28b, be embossed against the felt web 7a. This requires that while the plastics layer 7b is pressed onto the felt web 7a there are formed weakening zones in the plastics layer, and the thickness of the plastics layer as well as the roughness of the felt web and the roller pressure between said rollers 28a, 28b will be so adapted that there are provided weakening zones allowing for diffusion of vapour through an otherwise water- and windproof finished web product.

If there is used a polypropylene layer this can appropriately have a weight of 5-15g/m², whereas by using a polyethylene layer which is more open than polypropylene layer, the weight of the layer can be 10-20g/m².

Possibly, there may in the crude plastics material contained in the extruder 27, be included an additional material which under the influence of heat will form blisters of vapour or blisters of gas which when the layer is pressed onto the felt, will form thin zones and together with the embossing function of the felt onto the plastics layer, will form said weakening zones allowing for diffusion of vapour, whereas the finished web product as such is water- and windproof. In this connection the gram weight of the layer can be for example 20-70g/m².

It is to be understood that the putting together of the plastics material and the felt web can take place in other manners then those discussed above. For example, the plastics material can be applied in the form of a film or foil which through a suitable heat influence is attached to the felt web. In this connection it may be appropriate that the heating of the plastics film takes place by means of press rollers, said rollers having an appropriate roughness for the provision of the above discussed weakening zones.

In Fig. 10 there is diagrammatically illustrated another embodiment of a method for manufacturing a barrier web.

Here, felt web 107a from a supply 125 is moved via a supporting portion 126 and further along a supply roller 128b cooperating with a support roller 128a. The supply roller 128b receives a plastics material from a container 127 through a supply conduit 127a, the plastics material being supplied to a center portion of the supply roller 128b, from where, via perforations or net openings in the roller 128b, it will be applied onto the felt web 107a in a suitable layer thickness, depending on the consistency and the compound of the plastics material.

It is to be understood that the roller 128b is provided with a so-called doctor which can regulate the degree of application of plastics material 107b, and it is also to be understood that the plastics material can be applied in one or more layers.

Thereafter, the felt web 107a with its plastics layer 107b is guided through a heating oven 129 in which the plastics material 107b is allowed to cure or dry.

The laminated web product 107 will after the oven 129 possibly be further treated by means of a roller pair 131a, 131b which can provide a hot embossment or temperature controlled impression of the laminated web product 107. The finished web product 107 will thereafter be guided along a turning roller 132 for thereafter being assembled into a roll 130.

It is to be understood that the plastics material which is applied to the felt web can comprise polyacrylate or polyurethane, or a mixture thereof, in the form of a water dispersion or dissolved in a solvent, and that the plastics material is applied to the felt web in one or more relatively thin layers, preferably at room temperature.

A feature of the manufacturing resides in the fact that the plastics material, before it is applied to the felt web, is subjected to a mechanical foaming, the foaming providing thinner zones in the applied plastics layer, or that the plastics material comprises an additive achieving chemical foaming, for example during a subsequent drying process.

Possibly a plastics material can be taken as a basis, which comprises a PVC-material, for example a PVC-paste (plastisol) or a PVC-dispersion, and the PVC-material preferably is applied to the felt web by being coated thereonto.

In certain cases it might be appropriate that in the plastics material there is included an additive which under the influence of heat creates vapour blisters or gas pockets which when the coating or layer is pressed onto the felt provide thin zones and together with the embossing effect from the felt and/or press rollers onto the plastics layer form weakening zones allowing for diffusion of vapour through an otherwise water- and windproof finished web product.

## Claims

1. Method for manufacturing a barrier sheet (13) suitable for use between the foundation wall (11) and the foundation wall sill (12) of a building, characterised in that a barrier web (7) is provided along the whole of its longitudinal centre portion (14) with ribs (15) of resilient material, and in that parallel excess edge portions (15a, 15b) of the barrier web (7) are left uncovered on both sides of said central ribbed longitudinal portion.

2. Method as claimed in claim 1, characterised in that the ribs (15) comprise a resilient material which is polymer asphalt, and are so shaped that the width of the ribs and the relative locations thereof correspond to the various locations and dimensions of the foundation wall sill (12) and the concrete foundation wall (11) when the rib-reinforced barrier sheet is placed between the wall (11) and the sill (12) on the crest of the wall.

3. Method as claimed in claim 2, characterised in that the outermost rib (15y) has a width corresponding to the depth of the foundation wall sill (12).

4. Method as claimed in claim 2, characterised in that the distance between the outer margins of the two outermost ribs (15y) corresponds to the standard width of the foundation wall sill (12).

5. Method as claimed in any one of claims 2 to 4, characterised in that the rib-reinforced barrier sheet (13) is manufactured in rolls in which said excess portions (15a, 15b) of the barrier web (7) are folded in an overlapping manner over that side of the rib-reinforced barrier sheet (13) which is opposite to the side provided with the ribs.

6. Method as stated in claim 1, characterised in that said barrier web (7) is a felt web (7a) which is covered with a layer (7b) of plastics material including an additive which under the influence of heat develops vapour blisters which, when said layer is pressed onto the felt, break and form zones of weakening allowing for diffusion of vapour through an otherwise water- and wind-proof finished barrier web (7).

7. Method as claimed in claim 6, characterised in that the felt web (7a) comprises polypropylene felt, polyester felt or similar felt.

8. Method as claimed in claim 6 or 7, characterised in that the plastics material (7b) comprises polyacrylate or polyurethane, or a mixture thereof, in the form of water dispersion or dissolved in a solvent, and in that the plastics material (7b) is applied to the felt web in one or more relatively thin layers, preferably at room temperature.

9. Method as claimed in any of the claims 6 to 8, characterised in that the plastics material (7b), before being applied to the felt web, is subjected to a mechanical foaming, the foaming providing thinner zones of the applied plastics layer; or in that the plastics material comprises an additive promoting chemical foaming, for example during a subsequent drying process.

10. Method as claimed in claim 6 or 7, characterised in that the plastics material (7b) comprises a PVC material, for example a PVC-paste (plastisol) or a PVC-dispersion, and that the PVC material is preferably applied to the felt web by being coated thereonto.

11. Method as claimed in claim 1, characterised in that the plastics material (7b) comprises a polyethylene layer or polypropylene or a film having corresponding properties.

12. Method as claimed in claim 1, characterised in that the barrier web (7) comprises a felt web (7a) coated with a plastics material (7b) by use of rollers (28a,28b); and in that the roughness of the felt web is utilized for the formation of diffusion zones in the plastics layer (7b), allowing diffusion of vapour through an otherwise water- and wind-proof finished barrier web.

13. Method as claimed in claim 12, characterised in that in the crude plastics material (7b), there is included an additive which, under the influence of heat, develops vapour blisters or gas pockets which, when the layer is pressed onto the felt form thin zones and, together with the effect of the embossing, from the felt and/or the press rollers, onto the plastics layer form zones of weakening allowing for diffusion of vapour through an otherwise water- and windproof finished barrier web.

14. Method as claimed in any one of claims 11 to 13, characterised in that for the formation of the zones of weakening in the plastics layer there are used matt rollers.

15. Method as claimed in any one of claims 11 to 14, characterised in that for the formation of the zones of weakening in the plastics layer there are used coarse rollers, for example having an embossed surface.

16. Method as claimed in any of the preceding claims 6 to 15, characterised in that as a plastics layer (7b), there is used one or more layers having a gram weight of 3 to 300 g/m².

17. Method as claimed in any of claims 6 to 16, characterised in that as plastics layer (7b) there is used a polyethylene layer having a gram weight of 10-70 g/m².

18. Method as claimed in any of claims 6 to 16, characterised in that as plastics layer (7b) there is used a polypropylene layer having a gram weight of 5-40 g/m².

19. The use of the integrated ribbed barrier sheet (13) made according to the method of claim 1 in connection with a foundation wall structure (10) in which the sheet (13) is placed on the crest (11g) of the foundation wall (11) as a support for the foundation wall sill (12).

20. Use as claimed in claim 19 in which a construction element (1) is positioned on a foundation wall structure (10), wherein the ribbed centre portion (14) of the sheet has a width equal to the width of the foundation wall (11) such that the sheet (13) in its mounted position on the crest of the foundation wall (11) will have breather web portions (15a, 15b) protruding on both sides of the foundation wall crest (11g), whereafter one breather portion of the sheet (15a) is covered by an excess web portion (7') of the breather web (7) on the construction element (1) for further sealing of the space between the foundation and the body of the building.

## Patentansprüche

1. Verfahren zur Herstellung einer Sperrlage (13), geeignet für die Verwendung zwischen einer Fundamentwand (11) und dem Grundbalken (12) eines Gebäudes,
**dadurch gekennzeichnet**,
daß ein Sperrband (7) längs seines ganzen Längsmittelteiles (14) mit Rippen (15) aus elastischem Material versehen ist und daß parallele Überstandsränder (15a, 15b) des Sperrbandes (7) auf beiden Seiten zum berippten Längsmittelteil unbedeckt bleiben.

2. Verfahren nach Anspruch 1,
**dadurch gekennzeichnet**,
daß die Rippen (15) aus einem elastischen Material, bei dem es sich um polymeren Asphalt handelt, gebildet und so geformt sind, daß die Breite der Rippen und deren relative Plazierung unterschiedlichen Plazierungen und Bemessungen des Grundbalkens (12) und der Betonfundamentwand (11) entsprechen, wenn die rippenverstärkte Sperrlage zwischen der Wand (11) und dem Grundbalken (12) an der Oberkante der Wand plaziert ist.

3. Verfahren nach Anspruch 2,
**dadurch gekennzeichnet**,
daß die äußerste Rippe (15y) eine Breite hat, die der Tiefe des Grundbalkens (12) entspricht.

4. Verfahren nach Anspruch 2,
**dadurch gekennzeichnet**,
daß die Distanz zwischen den äußeren Rändern der beiden äußeren Rippen (15y) der S andardbreite des Grundbalkens (12) entspricht.

5. Verfahren nach jedem der Ansprüche 2 bis 4,
**dadurch gekennzeichnet**,
daß die rippenverstärkte Sperrlage (13) in Rollen hergestellt wird, bei denen die Überstandsränder (15a, 15b) des Sperrbandes (7) sich überlappend über das rippenverstärkte Sperrband (13) gefaltet sind, und zwar auf der Seite, die der mit Rippen besetzten Seite gegenübersteht.

6. Verfahren nach Anspruch 1,
**dadurch gekennzeichnet**,
daß die Sperrlage (7) ein Filzband (7a) ist, das mit einer Lage (7b) aus plastischem Material bedeckt ist, das ein Additiv enthält, das unter Wärmeeinfluß Dampfblasen entwickelt, die, wenn die Lage auf den Filz aufgepreßt wird, aufbrechen und geschwächte Zonen bilden, die die Diffusion von Dampf durch eine in anderer Weise wasser- und winddicht gefinishte Sperrlage (7) zulassen.

7. Verfahren nach Anspruch 6,
**dadurch gekennzeichnet**,
daß das Filzband (7a) Polypropylenfilz, Polyesterfilz oder ähnlichen Filz enthält.

8. Verfahren nach Anspruch 6 oder 7,
**dadurch gekennzeichnet**,
daß das plastische Material (7b) Polyacrylat oder Polyurethan oder eine Mischung davon in Form einer Wasserdispersion oder gelöst in einem Lösungsmittel enthält und daß das Plastikmaterial (7b) auf den Filz in einer oder mehreren relativ dünnen Lagen vorzugsweise bei Raumtemperatur aufgebracht wird.

9. Verfahren nach jedem der Ansprüche 6 bis 8,
**dadurch gekennzeichnet**,
daß das Plastikmaterial (7b), ehe es auf das Filzband aufgebracht wird, einer mechanischen Verschäumung unterworfen wird, wobei die Verschäumung dünne Zonen der aufgebrachten Plastiklagen bildet oder daß das Platikmaterial ein Additiv enthält, das eine chemische Verschäumung bspw. während eines folgenden Trocknungsprozesses bewirkt.

10. Verfahren nach Anspruch 6 oder 7,
**dadurch gekennzeichnet**,
daß das Plastikmaterial (7b) ein PVC-Material umfaßt, bspw. eine PVC-Paste (plastisol) oder eine PVC-Dispersion, und daß das PVC-Material vorzugsweise auf das Filzband durch Beschichten aufgebracht wird.

11. Verfahren nach Ansprurch 1,
**dadurch gekennzeichnet**,
daß das Plastikmaterial (7b) eine Lage aus Polyäthylen oder Polypropylen oder einen Film mit korrespondierenden Eigenschaften umfaßt.

12. Verfahren nach Anspruch 1,
**dadurch gekennzeichnet**,
daß die Sperrlage (7) ein Filzband (7a) umfaßt, beschichtet mit einem Plastikmaterial (7b) unter Verwendung von Walzen (28a, 28b) und daß die Rauhigkeit des Filzbandes ausgenutzt ist für die Ausbildung von Diffusionszonen in der Plastiklage (7b), die die Diffusion von Dampf durch eine anderweitig wasser- und winddicht gefinishte Sperrlage zulassen.

13. Verfahren nach Anspruch 1,
**dadurch gekennzeichnet**,
daß im rohen Plastikmaterial (7b) ein Additiv enthalten ist, das unter Wärmeeinfluß Dampfblasen oder Gastaschen entwickelt,die, wenn die Lage auf den Filz gepreßt wird, dünne Zonen und zusammen mit der Wirkung von Reliefprägungen, und zwar vom Filz und/oder Druckwalzen auf die Plastiklage geschwächte Zonen bilden, die die Diffusion von Dampf durch ein anderweitig wasser- und winddicht gefinishtes Sperrband zulassen.

14. Verfahren nach einem der Ansprüche 1 bis 13,
**dadurch gekennzeichnet**,
daß für die Ausbildung von geschwächten Zonen in der Plastiklage Walzen mit mattierter Oberfläche benutzt werden.

15. Verfahren nach einem der Ansprüche 11 bis 14,
**dadurch gekennzeichnet**,
daß für die Ausbildung geschwächter Zonen in der Plastiklage Walzen mit aufgerauhter Oberfläche benutzt werden, bspw. Walzen mit reliefierter Oberfläche.

16. Verfahren nach einem der vorhergehenden Ansprüche 6 bis 15,
**dadurch gekennzeichnet**,
daß als Plastiklage (7b) eine oder mehrere Lagen mit einem Grammgewicht von 3 - 300 g/m² benutzt werden.

17. Verfahren nach einem der Ansprüche 6bis 16,
**dadurch gekennzeichnet**,
daß als Plastiklage (7b) eine Polyäthylenlage mit einem Grammgewicht von 10 - 70 g/m² benutzt wird.

18. Verfahren nach einem der Ansprüche 6 bis 16,
**dadurch geknnzeichnet**,
daß als Plastiklage (7b) eine Polypropylenlage mit einem Grammgewicht von 5 - 40 g/m² benutzt wird.

19. Verwendung der nach Anspruch 1 verfahrensgemäß hergestellten, mit Rippen versehenen Sperrlage (13) in Verbindung mit einer Fundamentwandkonstruktion (10), bei der das Band (13) an der höchsten Kante (11g) der Fundamentwand (11) plaziert ist, die als Träger für den Grundbalken (12) dient.

20. Verwendung nach Anspruch 19, bei der ein Konstruktionselement (1) auf einer Fundamentwandkonstruktion (10) angeordnet ist, wobei der verrippte Mittelteil (14) der Lage eine Breite hat, die gleich ist der Breite der Fundamtentwand (11) derart, daß die Lage (13) in ihrer montierten Stellung an der oberen Kante der Fundamentwand (11) Atmungsteile (15a, 15b) aufweist, die auf beiden Seiten der Fundamentwandoberkante (11g) überstehen, wonach ein Atmungsteil des Bandes (15a) mit einem überstehenden Bandteil (7') des Atmungsbandes (7) auf dem Konstruktionselement (1) für die weitere Versiegelung des Spaltes zwischen dem Fundament und dem Gebäudekörper bedeckt wird.

## Revendications

1. Procédé pour fabriquer une feuille de protection (13) apte à être utilisée entre un mur de fondation (11) et la semelle (22) du mur de fondation d'un bâtiment, caractérisé en ce que la nappe de protection (7) est munie le long de l'ensemble de sa portion centrale longitudinale (14) de nervures (15) en un matériau élastique, et en ce que les portions de bord en excès et parallèles (15a, 15b) de la nappe de protection (7) sont laissées non recouvertes sur les deux côtés de ladite portion longitudinale nervurée centrale.

2. Procédé selon la revendication 1, caractérisé en ce que les nervures (15) comprennent un matériau élastique qui est de l'asphalte polymère, et sont conformées de manière que la largeur des nervures et leurs emplacements relatifs correspondent aux divers emplacements et aux diverses dimensions de la semelle (12) du mur de fondation et du mur de fondation en béton (11) quand la feuille de protection renforcée par des nervures est placée entre le mur (11) et la semelle (12) sur la crête du mur.

3. Procédé selon la revendication 2, caractérisé en ce que la nervure (15y) qui est la plus à l'extérieur présente une largeur correspondant à la profondeur de la semelle (12) du mur de fondation.

4. Procédé selon la revendication 2, caractérisé en ce que la distance entre les marges externes des deux nervures (15y) les plus à l'extérieur correspond à la largeur standard de la semelle (12) du mur de fondation.

5. Procédé selon l'une quelconque des revendications 2 à 4, caractérisé en ce que la feuille de protection renforcée par des nervures (13) est fabriquée en rouleaux dans lesquels lesdites portions en excès (15a, 15b) de la nappe de protection (17) sont repliées en chevauchement sur le côté de la feuille de protection renforcée par des nervures (13) qui est à l'opposé du côté muni des nervures.

6. Procédé selon la revendication 1, caractérisé en ce que ladite nappe de protection (7) est une nappe de feutre (7a) qui est recouverte par une couche (7b) de matière plastique comprenant un additif qui, sous l'influence de la chaleur, développe des cloques de vapeur qui, lorsque ladite couche est pressée sur le feutre, se rompent et forment des zones d'affaiblissement permettant la diffusion de la vapeur à travers une nappe de protection (7) terminée et par ailleurs imperméable à l'eau et au vent.

7. Dispositif selon la revendication 6, caractérisé en ce que la nappe de feutre (7a) comprend un feutre en polypropylène, un feutre en polyester ou un feutre similaire.

8. Procédé selon la revendication 6 ou 7, caractérisé en ce que la matière plastique (7b) comprend du polyacrylate ou du polyuréthanne, ou un mélange de ceux-ci, sous forme d'une dispersion dans de l'eau ou dissous dans un solvant, et en ce que la matière plastique (7b) est appliquée sur la nappe de feutre sous forme d'une ou plusieurs couches relativement minces, de préférence à la température ambiante.

9. Dispositif selon l'une quelconque des revendications 6 à 8, caractérisé en ce que la matière plastique (7b), avant d'être appliquée sur la nappe de feutre, est soumise à un moussage mécanique, le moussage constituant des zones plus minces dans la couche plastique appliquée; ou en ce que la matière plastique comprend un additif qui détermine le moussage chimique, par exemple pendant une opération de séchage subséquente.

10. Procédé selon la revendication 6 ou 7, caractérisé en ce que la matière plastique (7b) comprend un matériau PVC, par exemple une pâte de PVC (plastisol) ou une dispersion de PVC, et en ce que le matériau PVC est de préférence appliqué sur la nappe de feutre en étant enduit sur celle-ci.

11. Procédé selon la revendication 1, caractérisé en ce que la matière plastique (7b) comprend une couche de polyéthylène ou de polypropylène ou une pellicule présentant des propriétés correspondantes.

12. Procédé selon la revendication 1, caractérisé en ce que la nappe de protection (7b) comprend une nappe de feutre (7a) revêtue d'une matière plastique (7b) en utilisant des rouleaux (28a, 28b); et en ce que la rugosité de la nappe de feutre est utilisée pour la formation de zones de diffusion dans la couche plastique (7b), permettant la diffusion de la vapeur à travers la nappe de protection terminée qui est par ailleurs imperméable à l'eau et au vent.

13. Procédé selon la revendication 12, caractérisé en ce qu'un additif est inclus dans la matière plastique brute (7b) qui, sous l'influence de la chaleur, développe des cloques de vapeur ou des poches de gaz qui, lorsque la couche est pressée sur le feutre, forment des zones minces et, avec l'effet du gaufrage provenant du feutre et/ou des rouleaux presseurs sur la couche de matière plastique, forment des zones d'affaiblissement permettant la diffusion de la vapeur à travers une nappe de protection terminée qui est par ailleurs étanche à l'eau et au vent.

14. Procédé selon l'une quelconque des revendications 11 à 13, caractérisé en ce que des rouleaux lisses sont utilisés pour la formation des zones d'affaiblissement par la couche de matière plastique.

15. Procédé selon l'une quelconque des revendications 11 à 14, caractérisé en ce que des rouleaux à surface irrégulière, comprenant par exemple une surface gaufrée, sont utilisés pour la formation des zones d'affaiblissement dans la matière plastique.

16. Procédé selon l'une quelconque des revendications 6 à 15, caractérisé en ce qu'on utilise en tant que matière plastique (7b) une ou plusieurs couches ayant un poids compris entre 3 et 300 g/m².

17. Procédé selon l'une quelconque des revendications 6 à 16, caractérisé en ce qu'on utilise en tant que matière plastique (7b) une couche de polyéthylène dont le poids est compris entre 10 et 70 g/m².

18. Procédé selon l'une quelconque des revendications 6 à 16, caractérisé en ce qu'on utilise en tant que matière plastique (7b) une couche de polypropylène dont le poids est compris entre 5 et 40 g/m².

19. Utilisation de la couche de protection nervurée intégrée (13) réalisée selon le procédé de la revendication 1 en liaison avec une structure de mur de fondation (10) dans laquelle la feuilles est placée sur la crête (11g) du mur de fondation (11) en tant que support pour la semelle (12) du mur de fondation.

20. Utilisation selon la revendication 19, dans laquelle un élément de construction (1) est positionné sur une structure (10) d'un mur de fondation, dans laquelle la portion centrale nervurée (14) de la feuille présente une largeur égale à la largeur du mur de fondation (11) de manière que la feuille (13), dans sa position montée sur la crête du mur de fondation (11) présente des portions de nappe de respiration (15a, 15b) faisant saillie sur les deux côtés de la crête (11g) du mur de fondation, suite à quoi une portion de respiration de la feuille (15c) est recouverte par une portion de nappe en excès (7') de la nappe de respiration (7) sur l'élément de construction (1) pour renforcer l'étanchéité de l'espace compris entre la fondation et le corps du bâtiment.
